# EUROPÄISCHE PATENTSCHRIFT

(11) **EP 0 619 160 B1**
(45) Veröffentlichungstag und Bekanntmachung des Hinweises auf die Patenterteilung: **14.05.1997**
(21) Anmeldenummer: 94104368.9
(22) Anmeldetag: 19.03.1994
(51) Int. Cl.: B23C 3/34, B23B 51/00

(54) **Vorrichtung und Verfahren zum Einbringen von mehreren Grübchen in eine zylindrische Wandung einer in einem Bauteil vorgesehenen Senkbohrung**
Apparatus and method for grooving a cylindrical wall of a piece having a blind hole
Appareil et procédé à rainurer dans une paroi cylindrique d'une pièce ayant un trou borgue

(30) Priorität: 27.03.1993 DE 4309997
(43) Veröffentlichungstag der Anmeldung: 12.10.1994
(73) Patentinhaber: ABB Reaktor GmbH, D-68167 Mannheim (DE)
(72) Erfinder: Haller, Hans, D-68169 Mannheim (DE); Schreiner, Klaus, D-67346 Speyer (DE)
(74) Vertreter: Rupprecht, Klaus, Dipl.-Ing.

(56) Entgegenhaltungen:
- EP-A- 0 479 140

## Beschreibung

Die Erfindung betrifft eine Vorrichtung zum Einbringen von mehreren Grübchen in eine zylindrische Wandung einer in einem Bauteil vorgesehenen Senkbohrung mit einer der Anzahl der gleichzeitig einzubringenden Grübchen entsprechenden Anzahl von planetenartig zu einer zentralen Stange angeordneten, je einen Fräser tragenden und in einem Lagergehäuse geführten Frässpindeln, wobei ein die Steuerelemente für eine Radialbewegung der Frässpindeln enthaltender Gehäuseteil mit einem der Senkbohrung zugewandten Zentrierstück und mit einem der Senkbohrung abgewandten Zwischenstück verbunden ist, das seinerseits mit einem Getriebegehäuse eine Art Zylinder-/Kolbenverbindung eingeht, wobei die zentrale Stange mit dem Getriebegehäuse verbunden ist, und wobei nach dem Anlaufen des Zentrierstückes an einen Widerstand das Getriebegehäuse eine vorgebbare Bewegung in Richtung Senkbohrung ausführt.

Eine derartige Vorrichtung ist aus der DE 40 31 060 C1 (EP-A-0 479 140) bekannt. Dort wird der Fräsvorgang bereits ausgelöst, wenn ein Teil des vorderen Endbereiches der Vorrichtung gegen ein Hindernis läuft, so daß die exakte Positionierung der Fräser relativ zum Bauteil nicht gewährleistet ist. Die relativ große Entfernung zwischen der Lagerstelle der Frässpindel und dem Fräser führt zu ungenauen Fräsvorgängen.

Es stellt sich die Aufgabe, eine Vorrichtung und ein Verfahren zum Einbringen von mehreren Grübchen in eine zylindrische Wandung einer in einem Bauteil vorgesehenen Senkbohrung anzugeben, mit der bzw. dem eine Fehlpositionierung der Fräser vermieden und bei kompakter Bauweise die Fräsgenauigkeit erhöht wird.

Gelöst wird diese Aufgabe erfindungsgemäß dadurch, daß ein im Querschnitt kreuzförmiges Gehäuse in Achsrichtung des Gehäuseteils relativ zu diesem bewegbar ist, daß das kreuzförmige Gehäuse in seinen Innenraum ragende und jeweils gegenüberliegend angeordnete Noppen trägt, die in ebenfalls gegenüberliegend angeordneten und in Richtung Zentrierstück divergierenden Nuten der Lagergehäuse verfahrbar sind, daß der der Senkbohrung zugewandte Teil des Zentrierstückes als relativ zu demselben und zu einem hülsenförmigen Druckstück bewegbarer Anschlag ausgebildet ist, und daß das Druckstück mit seinem der Senkbohrung zugewandten Ende ein Verriegelungselememt des Anschlages und mit seinem anderen Ende die zentrale Stange kontaktet.

Die einen anderen Weg beschreitende Steuerung der Radialbewegung der Frässpindeln führt zu einer kürzeren Bauweise. Erst nach der Entriegelung des Anschlages ist eine Radialbewegung der Frässpindel und somit der Fräser möglich.

Nach einer bevorzugten Ausgestaltung ist vorgesehen, daß dem Getriebegehäuse mehrere Schubstangen zugeordnet sind, daß jede Schubstange mit ihrem dem Getriebegehäuse abgewandten Ende an einer Lasche des kreuzförmigen Gehäuses grenzt, daß ein in einen Deckel des Gehäuseteils eingeschraubter Bolzen mit seinem freien Ende die Lasche durchsetzt und in eine Zentrumsbohrung der Schubstange ragt, und daß der Bolzen ein zwischen dem Deckel und der Lasche wirkendes Tellerfederpaket aufnimmt.

Die Schubstangen gewährleisten einen exakt gleichen Bewegungsablauf von Antriebsgehäuse und kreuzförmigem Gehäuse nach der Freigabe des Fräsvorganges durch die Verriegelungselemente des Zentrierstückes. Ebenso exakt verläuft die Rückführung der Vorrichtung in ihre Ausgangsposition nach erfolgtem Fräsvorgang durch die Kraft des Tellerfederpaketes, das unter Zwischenschaltung der Lasche auf die jeweilige Schubstange wirkt.

Durch die lösbare Verbindung des Zentrierstückes mit dem Gehäuseteil ist ein Zugang der Vorrichtung von der Frontseite aus möglich, wodurch neben der kompakten Bauweise die Reparaturfreundlichkeit verbessert wird.

Der Anschlag ist vorzugsweise ein Bundbolzen, der im Bereich des Bundes von mehreren im Zentrierstück eingeschraubten und den vorgebbaren Verschiebeweg des Anschlages erlaubenden Paßschrauben durchsetzt ist. Der Bolzenteil des Bundbolzens ragt dabei in das Druckstück hinein und ist gegenüber dem Druckstück federnd abgestützt. Ein den Bolzenteil durchsetzender Querstift ist in einem Längsschlitz des Druckstückes geführt und das Verriegelungselement besteht aus mehreren angefederten Zylinder, die in eine zwischen dem Querstift und dem Bund angeordnete Ringnut des Bolzenteiles eingreifen.

Zur Zentrierung des Zentrierstückes in der Senkbohrung sind radial nach außen wirkende Zentrierhilfen vorgesehen, die an der zylindrischen Wandung der Senkbohrung zur Anlage kommen.

Vorzugsweise ist zur Kontrolle der Relativbewegung des Getriebegehäuses dem Zwischenstück eine Wegemeßvorrichtung zugeordnet.

Ein Verfahren zum Einbringen von mehreren Grübchen mit einer erfindungsgemäßen Vorrichtung zeichnet sich durch folgende Schritte aus.
- Die Vorrichtung wird in einer mit dem Zentrierstück fluchtende Position zur Senkbohrung gebracht;
- die Frässpindeln werden in Drehung versetzt;
- durch Bewegung der Vorrichtung in axialer Richtung wird der Anschlag an einer Grundfläche der Senkbohrung zur Anlage gebracht und bis zur Aufhebung der Verriegelung relaitv zum Zentrierstück bewegt;
- nach dem Aufheben der Verriegelung wird das Getriebegehäuse zusammen mit der zentralen Stange, dem Druckstück und dem kreuzförmigen Gehäuse ein vorgebbares Maß in Richtung Zentrierstück bewegt, wobei kontinuierlich eine radial gerichtete Vorschubbewegung der Frässpindeln und damit der Fräser erfolgt;
- die Vorrichtung wird in axialer Richtung zurückgefahren, wobei die Kraft des Tellerfederpaketes das kreuzförmige Gehäuse, die Lagergehäuse mit den Frässpindeln und das Getriebegehäuse wieder in ihre Ausgangsposition gelangen und die Verriegelung zwischen Anschlag und Zentrierstück wieder hergestellt wird.

Anhand eines Ausführungsbeispiels und der schematischen Figuren 1 bis 8 wird eine Vorrichtung und ein Verfahren zum Einbringen von mehreren Grübchen in eine zylindrische Wandung einer in einem Bauteil vorgesehenen Senkbohrung beschrieben.
Dabei zeigt die
- Fig. 1: einen einer Senkbohrung zugeordneten Teil der Vorrichtung in einem Längsschnitt,
- Fig. 1a: einen Schnitt entlang der Linie I-I durch einen Bauteil mit der Senkbohrung nach der Fig. 1,
- Fig. 2: den restlichen Teil der Vorrichtung der Fig. 1 ebenfalls in einem Längsschnitt,
- Fig. 3: einen Schnitt entlang der Linie III-III der Fig. 2,
- Fig. 4: einen Schnitt entlang der Linie IV-IV der Fig. 1,
- Fig. 5: eine teilweise im Schnitt dargestellte Ansicht in Pfeilrichtung V der Fig. 1,
- Fig. 6: einen Schnitt entlang der Linie VI-VI der Fig. 5,
- Fig. 7: eine teilweise im Schnitt dargestellte Teilansicht in Pfeilrichtung VII der Fig. 1 und
- Fig. 8: das Zentrierstück der Vorrichtung nach Fig. 1 in einem größeren Maßstab.

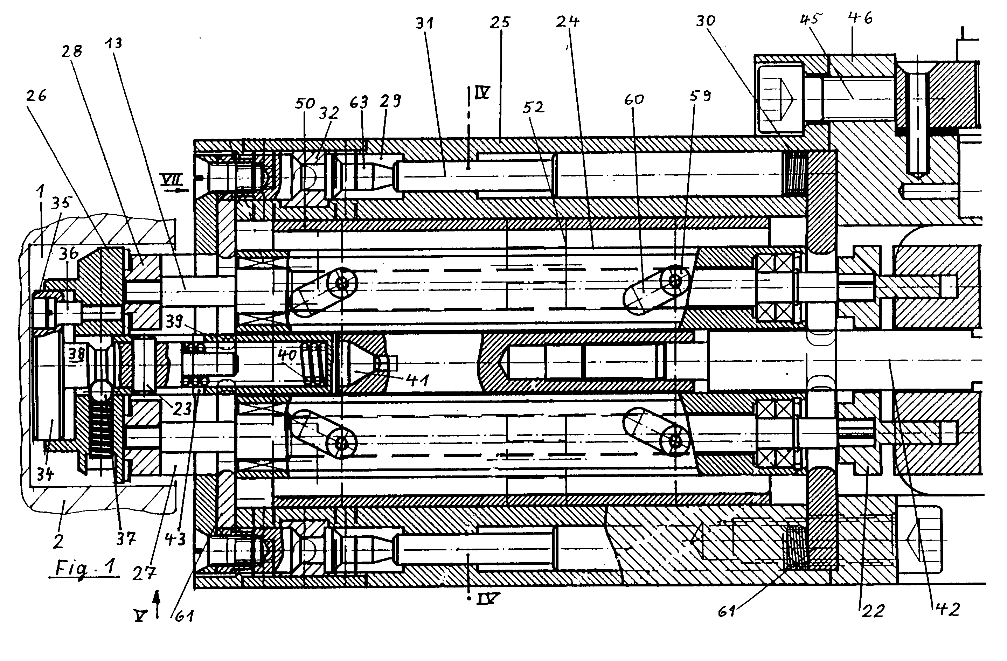

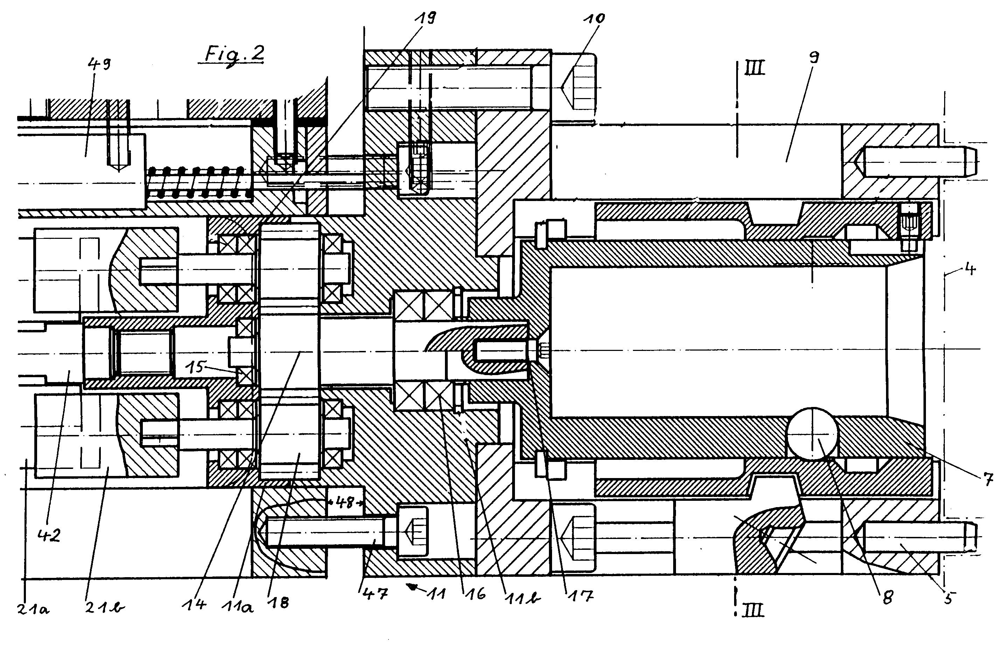

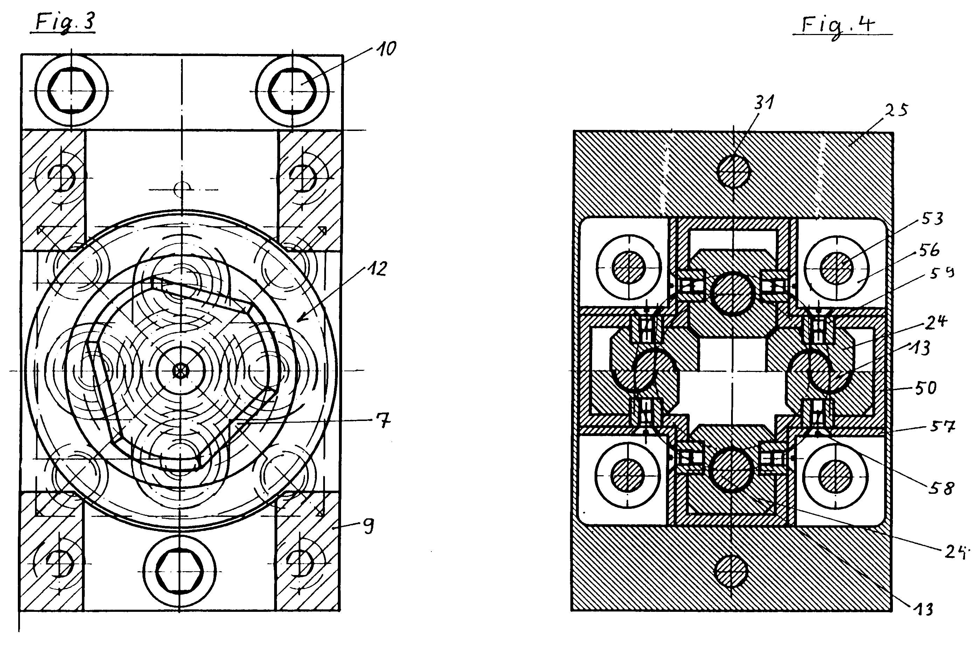

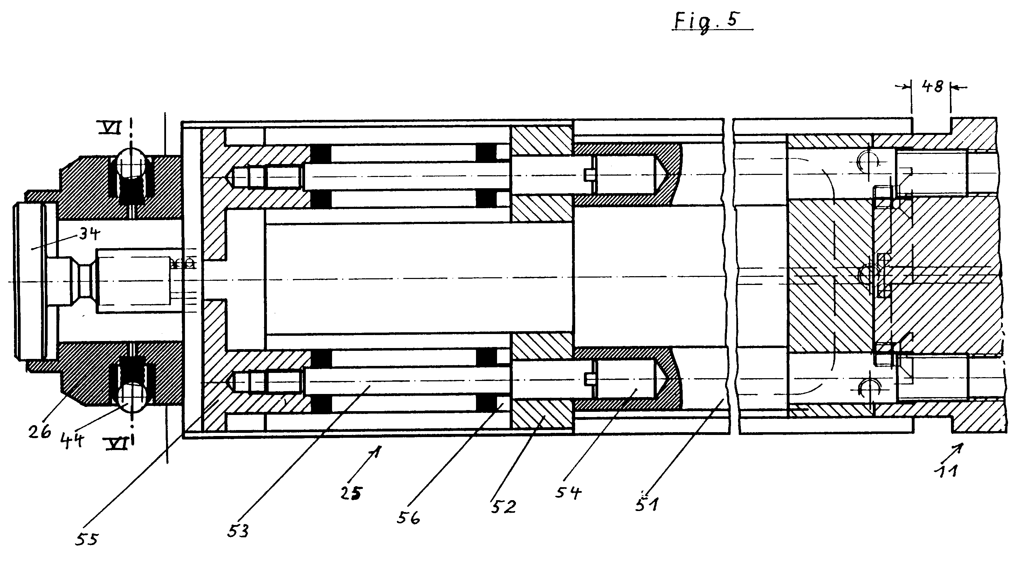

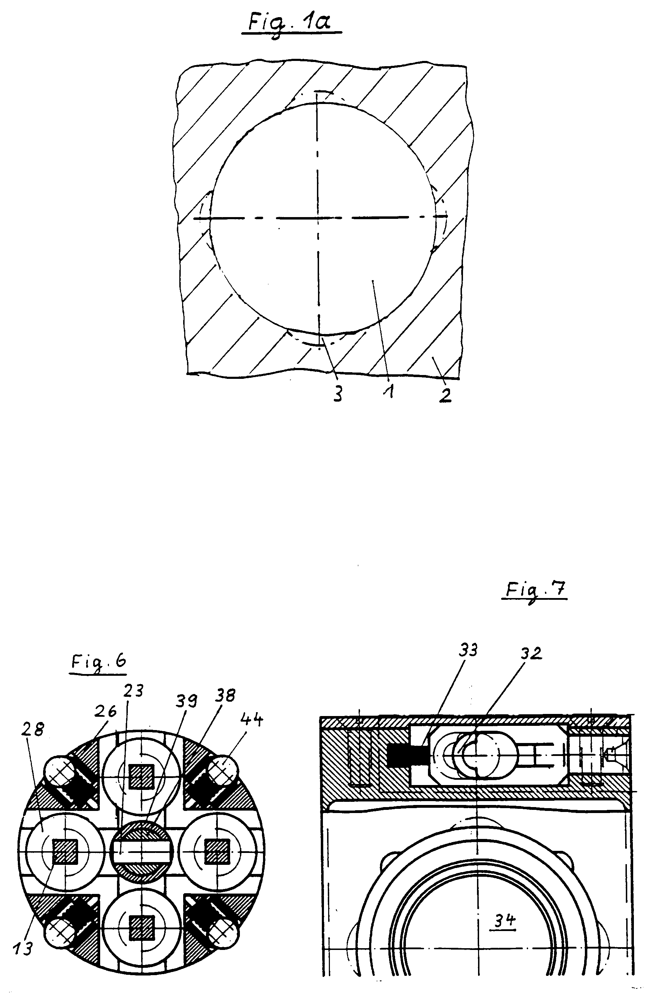

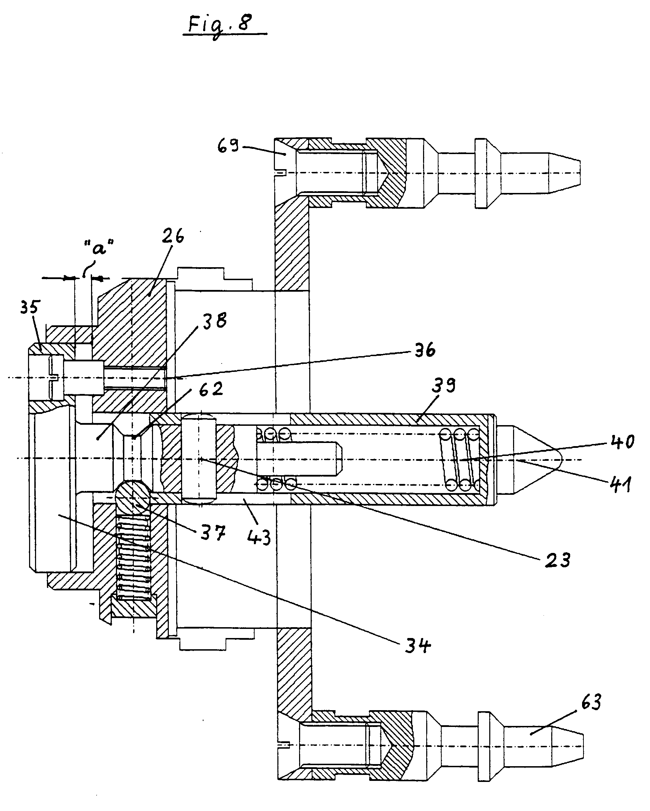

Die Figur 1 zeigt den einer Senkbohrung 1 eines Bauteiles 2 zugewandten Teil der Vorrichtung, während die Figur 2 in einer Fortführung der Figur 1 den restlichen Teil der Vorrichtung darstellt. Wie die Fig. 1a, die eine Schnittdarstellung entlang der Linie I-I der Figur 1 lediglich durch den Bauteil 2 zeigt, erkennen läßt, dient die Vorrichtung zur Einbringung von in strich-punktierten Linien angedeuteten Grübchen 3 in die Wandung der Senkbohrung 1. Diese Grübchen sind ca. 3 mm tiefe Aussparungen, die beispielsweise zur Sicherung einer in der Bohrung 1 anzuordnenden Schraube dienen. Beim Ausführungsbeispiel sind vier im Abstand von 90° auf dem Umfang verteilte Grübchen eingebracht. Wie mit strichpunktierten Linien am rechten Rand der Figur 2 angedeutet ist, wird die Vorrichtung von Antriebsmitteln 4 getragen, die mit Bohrungen zur Aufnahme der Zentrierstifte 5 und mit einem Zapfen, der in die als Polygon (Figur 3) ausgebildete Aufnahmebohrung 6 eines Kupplungsstückes 7 eingreift, versehen ist. Eine Kugelkupplung 8 dient der Arretierung. Ein das Kupplungsstück 6 übergreifendes und die Zentrierstifte 5 tragendes Anschlußstück 9 ist mittels Schrauben 10 mit einem aus zwei Gehäueschalen 11a, 11b bestehenden Getriebegehäuse 11 verbunden, das ein Getriebe 12 (Figur 3) zur Übertragung der Drehbewegung des Kupplungsstückes 7 auf vier 90° zueinander versetzt angeordnete Frässpindeln 13 aufnimmt. Eine zentrale Getriebewelle 14 ist über Kugellager 15 in der linken Gehäuseschale 11a und über ein Kugellager 16 in der rechten Gehäuseschale 11b abgestützt. Zwischen der Getriebewelle 14 und dem Kupplungsstück 7 besteht über eine Schraube 17 eine Verbindung, die eine spielfreie Übertragung einer Dreh- und/oder Linearbewegung des Kupplungsstückes 7 sicherstellen. In die Verzahnung der zentralen Getriebewelle 14 greifen vier um 90° zueinander versetzte Zahnräder 18 ein, deren Wellenstümpfe über Kugellager 19 in der linken Gehäuseschale 11a und über Kugellager 20 in der rechten Gehäuseschale 11b abgestützt sind. Die die linke Gehäuseschale 11a durchsetzenden Wellenstümpfe gehen mit je einen Kupplungsteil 21a eine auch in axialer Richtung starre Polygonverbindung ein. Ein Kupplungteil 21b geht mit einem Verbindungsstück 22 eine in axialer und in radialer Richtung ein bestimmtes Maß ausgleichende Verbindung ein, während zwischen den Kupplungsteilen 21a, 21b in radialer Richtung eine Auslenkung möglich ist. Das Verbindungsstück 22 ist polygonartig und auch in axialer Richtung starr mit einer Frässpindel 13 verbunden. Die in einem Lagergehäuse 24 nahezu quadratischen Querschnitts (Figur 4) gelagerte Frässpindel 13 endet in einem lösbar mit einem Gehäuseteil 25 verbundenen Zentrierstück 26 (Figur 8). In einer Aussparung 27 des Zentrierstückes 26 ragend, trägt die Frässpindel 13 einen Fräser 28 zum Einbringen eines Grübchens 3 in die Senkbohrung 1. Das in der Figurn 8 in einem größeren Maßstab dargestellte Zentrierstück weist zwei gegenüberliegende Zapfen 63 auf, die in je eine Bohrung 29 des Gehäuseteils 25 ragen und gegen einen über eine Feder 30 abgestützten Anschlagbolzen 31 anstoßen. Ein in der Figur 7 dargestelltes Verriegelungsstück 32 ist gegenüber einer Feder 33 verschiebbar und stellt entsprechend seiner Stellung die Ver- oder Entriegelung des jeweiligen Zapfens sicher. In der Stellung "Entriegelung" unterstützen die Anschlagbolzen 31 den Ausbau des Zentrierstückes 26.

Das Zentrierstück weist an seinem der Senkbohrung 1 zugewandten Ende einen Anschlag 34 auf, der über mehrere seinen Bund 35 durchsetzende Paßschrauben 36 derart am Zentrierstück 26 befestigt ist, daß eine Relativbewegung im Bereich des Abstandes "a" möglich ist. In der gezeichneten Stellung besteht über angefederte Zylinder 37 eine Verriegelung zwischen einem Bolzenteil 38 (Ringnut 62) des Anschlages 34 und dem Zentrierstück 26, die nach Überwindung des Abstandes "a" aufgehoben ist. Der Bolzenteil 38 erstreckt sich in ein hülsenförmiges Druckstück 39, in dem er unter Überwindung der Kraft der Druckfeder 40 bewegbar ist. An seinem dem Zentrierstück abgewandten Ende ist das Druckstück mit einem Kontaktstück 41 versehen, das an einer von der linken Gehäuseschale 11a ausgehenden zentralen Stange 42 formschlüssig angelegt ist. Der Bolzenteil 38 ist von einem Querstift 23 durchsetzt, der in einem Langloch 43 des Druckstückes 39 bewegbar ist. Das Zentrierstück 26 ist umfangsseitig mit in den Figuren 5 und 6 ersichtlichen, radial nach außen wirkenden Zentrierhilfen 44 ausgestattet, die an der zylindrischen Wandung der Senkbohrung 1 zur Anlage kommen. Das Gehäuseteil 25 ist über Schrauben 45 mit einem Zwischenstück 46 verbunden, das seinerseits über Schrauben 47 derart mit dem Getriebegehäuse 11 verbunden ist, daß eine Art Kolben-/Zylinderbewegung im Rahmen des vorgebbaren Weges 48 zwischen dem Getriebegehäuse 11 und dem Zwischenstück 47 erfolgen kann. Die Wegstrecke 48 wird mit einer Wegemeßeinrichtung 49 kontrolliert.

Ein auch in der Figur 4 erkennbares kreuzförmiges Gehäuse 50 ist bei aufgehobener Verriegelung zwischen dem Zentrierstück 26 und dem Anschlag 34 entlang des vorggebbaren Weges 48 verschiebbar. Dazu dienen mehrere in der Figur 5 dargestellte Schubstangen 51, die mit ihrem Gewindeteil in das Getriebegehäuse 11 eingeschraubt sind und mit ihrem freien Ende an eine auch in Figur 1 in strichpunktierten Linien angedeuteten Lasche 52 des kreuzförmigen Gehäuses 50 angrenzt. Ihre Führung erhält die Schubstange 51 durch einen die jeweilige Lasche durchsetzenden Bolzen 53, der in eine Zentrumsbohrung 54 der Schubstange 51 ragt und in einem Deckel 55 des Gehäuseteils 25 eingeschraubt ist. Über ein dem Bolzen zugeordnetes Tellerfederpaket 56 erfolgt eine selbsttätige Rückstellbewegung entlang der Wegstrecke 48.

Gemäß Figur 4 sind dem kreuzförmigen Gehäuse 50 Winkelstücke 57 zugeordnet, an welchen mittels Schrauben 58 Noppen 59 befestigt sind. Die auch in der Figur 1 erkennbaren Noppen 59 sind bei der Bewegung des kreuzförmigen Gehäuses 50 in Nuten 60 verfahrbar, von welchen jeweils zwei in Reihe und in Richtung des Zentrierstücks divergierend in jedem Lagergehäuse 24 eingebracht sind. Mit der Relativbewegung des kreuzförmigen Gehäuses 50 erfolgt eine durch die Noppen-/Nutverbindung gesteuerte radial nach außen führende Bewegung der Lagergehäuse 24 entlang von Führungsflächen 61 und somit der Frässpindeln 13 mit dem jeweiligen Fräser 28. In der Figur 4 zeigt die untere Hälfte die Stellung der Lagergehäuse 24 nach erfolgter Überwindung des Weges 48 und die obere Hälfte die Stellung der Lagergehäuse 24 gemäß der in Figur 1 gezeigten Stellung.

Die Funktion der Vorrichtung und das Verfahren mit einer solchen Vorrichtung wird nachfolgend erläutert. Nachdem die Vorrichtung mit ihrem Zentrierstück 26 in fluchtender Position zur Senkbohrung 1 gebracht worden ist, wird mit dem angedeuteten Antriebsmittel 4 das Kupplungsstück 7 in Drehung versetzt, so daß diese Drehbewegung über das Getriebe 12 auf die Frässpindel 13 übertragen wird. Durch Bewegung der Vorrichtung in axialer Richtung wird der Anschlag 34 an der Grundfläche der Senkbohrung 1 zur Anlage gebracht und bis zur Aufhebung der Verrieglung zwischen Zentrierstück 26 und Anschlag 34 relativ zum Zentrierstück 26 bewegt. Nach dem Aufheben der Verriegelung wird das Getriebegehäuse 11 zusammen mit der zentralen Stange 42, dem Druckstück 39 und dem kreuzförmigen Gehäuse 50 die Wegstrecke 48 in Richtung Zentrierstück 26 bewegt. Die Frässpindeln 13 führen diesen Weg nicht mit aus, da die Wegstrecke 48 im Bereich des Verbindungsstückes 22 und dem Kupplungsteil 21b kompensiert wird. Die exakt gesteuerte Auslenkbewegung der Frässpindeln 13 entspricht der gewünschten Vorschubbewegung der Fräser zur Erzeugung der Grübchen 3. Nach erfolgtem Fräsvorgang wird die axiale Antriebskraft des Antriebsmittel 4 aufgehoben, so daß über die Kraft der Tellerfederpakete 56 das kreuzförmige Gehäuse 50, die Lagergehäuse 24 mit den Frässpindeln 13 und das Getriebegehäuse 11 wieder in ihre Ausgangsposition gebracht werden. Gleichzeitig wird die Verriegelung zwischen dem Anschlag 34 und dem Zentrierstück 26 wieder hergestellt.

## Patentansprüche

1. Vorrichtung zum Einbringen von mehreren Grübchen (3) in eine zylindrische Wandung einer in einem Bauteil (2) vorgesehenen Senkbohrung (1) mit einer der Anzahl der gleichzeitig einzubringenden Grübchen entsprechenden Anzahl von planetenartig zu einer zentralen Stange (42) angeordneten, je einen Fräser (28) tragenden und in einem Lagergehäuse (24) geführten Frässpindeln (13), wobei ein die Steuerelemente für eine Radialbewegung der Frässpindeln (13) enthaltender Gehäuseteil (25) mit einem der Senkbohrung (1) zugewandten Zentrierstück (26) und mit einem der Senkbohrung abgewandten Zwischenstück (46) verbunden ist, das seinerseits mit einem Getriebegehäuse (11) eine Art Zylinder-/Kolbenverbindung eingeht, wobei die zentrale Stange (42) mit dem Getriebegehäuse (11) verbunden ist und wobei nach dem Anlaufen des Zentrierstückes (26) an einen Widerstand das Getriebegehäuse (11) eine vorgebbare Bewegung in Richtung Senkbohrung (1) ausführt, **dadurch gekennzeichnet,** daß ein im Querschnitt kreuzförmiges Gehäuse (50) in Achsrichtung des Gehäuseteiles (25) relativ zu diesem bewegbar ist, und daß das kreuzförmige Gehäuse (50) in seinen Innenraum ragende und jeweils gegenüberliegend angeordnete Noppen (59) trägt, die in ebenfalls gegenüberliegend angeordneten und in Richtung Zentrierstück (26) divergierenden Nuten (60) der Lagergehäuse (24) verfahrbar sind, daß der der Senkbohrung zugewandte Teil des Zentrierstückes (26) als relativ zu demselben und zu einem hülsenförmigen Druckstück (39) bewegbarer Anschlag (34) ausgebildet ist, und daß das Druckstück (39) mit seinem der Senkbohrung (1) zugewandten Ende ein Verriegelungselement (37) des Anschlages (34) und mit seinem anderen Ende die zentrale Stange (42) kontaktet.

2. Vorrichtung nach Anspruch 1, dadurch gekennzeichnet, daß dem Getriebegehäuse (11) mehrere Schubstangen (51) mit ihrem dem Getriebegehäuse (11) abgewandten Ende an eine Lasche (52) des kreuzförmigen Gehäuses (50) grenzt, und daß ein in einen Deckel (55) des Gehäuseteils (25) eingeschraubter Bolzen (53) mit seinem freien Ende die Lasche (52) durchsetzt und in eine Zentrumsbohrung (54) der Schubstange (51) ragt, und daß jeder Bolzen (53) ein zwischen dem Deckel (55) und der Lasche (52) wirkendes Tellerfederpaket (56) aufnimmt.

3. Vorrichtung nach Anspruch 1, dadurch gekennzeichnet, daß das Zentrierstück (26) lösbar mit dem Gehäuseteil (25) verbunden ist, wobei verriegelbare Zapfen (63) des Zentrierstückes (26) an einem federnd ausgebildeten Anschlagbolzen (31) zur Anlage kommen.

4. Vorrichtung nach Anspruch 1, dadurch gekennzeichnet, daß der Anschlag (34) ein Bundbolzen ist, der im Bereich des Bundes (35) von mehreren im Zentrierstück eingeschraubten und den vorgebbaren Verschiebeweg des Anschlages erlaubenden Paßschrauben (36) durchsetzt ist, daß der Bolzenteil (38) des Bundbolzens in das Druckstück (39) hineinragt und gegenüber dem Druckstück federnd abgestützt ist, daß ein den Bolzenteil (38) durchsetzender Querstift (23) in einem Langloch (43) des Druckstückes (39) geführt ist und daß das Verriegelungselement aus mehreren angefederten Zylindern (37) besteht, die in eine zwischen Querstift und Bund angeordneter Ringnut (62) des Bolzenteils (38) eingreifen.

5. Vorrichtung nach Anspruch 1, dadurch gekennzeichnet, daß das Zentrierstück (26) eine radial nach außen wirkende Zentrierhilfe (44) aufweist, die an der zylindrischen Wandung der Senkbohrung (1) zur Anlage kommen.

6. Vorrichtung nach Anspruch 1, dadurch gekennzeichnet, daß dem Zwischenstück (46) eine Wegemeßeinrichtung (49) zur Kontrolle der Relativbewegung des Getriebegehäuses (11) zugeordnet ist.

7. Verfahren zum Einbringen von mehreren Grübchen (3)in eine zylindrische Wandung einer in einem Bauteil (2) vorgesehenen Senkbohrung (1) mit einer Vorrichtung nach einem der Ansprüche 2 bis 6, dadurch gekennzeichnet, daß die Vorrichtung in eine mit dem Zentrierstück (26) fluchtende Position zur Senkbohrung (1) gebracht wird, daß die Frässpindeln (13) in Drehung versetzt werden, daß durch Bewegen der Vorrichtung in axialer Richtung der Anschlag (34) an einer Grundfläche der Senkbohrung (1) zur Anlage gebracht und bis zur Aufhebung der Verriegelung relativ zum Zentierstück (26) bewegt wird, und daß nach dem Aufheben der Verriegelung das Getriebegehäuse (11) zusammen mit der zentralen Stange (42), dem Druckstück (39) und dem kreuzförmigen Gehäuse (50) ein vorgebbares Maß in Richtung Zentrierstück (26) bewegt wird, wobei kontinuierlich eine radial gerichtete Vorschubbewegung der Frässpindeln (13) und damit der Fräser (28) erfolgt, daß die Vorrichtung in axialer Richtung zurückgefahren wird, wobei die Kraft des Tellerfederpaketes (56) das kreuzförmige Gehäuse (50), die Lagergehäuse (24) mit den Frässpindeln (13) und das Getriebegehäuse (11) wieder in ihre Ausgangsposition bringen und die Verriegelung zwischen Anschlag (34) und Zentrierstück (26) wieder hergestellt wird.

## Claims

1. Device for inserting a plurality of dimples (3) in a cylindrical wall of a counterbore (1) provided in a component (2), having a number of milling spindles (13) which corresponds to the number of dimples to be inserted simultaneously, which spindles are arranged planet-like relative to a central rod (42), carry one milling cutter (28) each and are guided in a bearing housing (24), a housing part (25) containing the control elements for a radial movement of the milling spindles (13) being connected to a centring piece (26) facing the counterbore (1) and to an intermediate piece (46) remote from the counterbore, which intermediate piece (46) in turn makes a type of cylinder/piston connection with a gear housing (11), the central rod (42) being connected to the gear housing (11), and the gear housing (11) performing a predeterminable movement in the direction of the counterbore (1) after the centring piece (26) runs against a resistance, characterized in that a housing (50) of cross-shaped cross-section is movable in the axial direction of the housing part (25) relative to the latter, and in that the cross-shaped housing (50) has nipples (59) which project in its interior, are in each case arranged opposite one another and are displaceable in grooves (60) of the bearing housing (24) which are likewise arranged opposite one another and diverge in the direction of the centring piece (26), in that the part of the centring piece (26) facing the counterbore is designed as a stop (34) movable relative to the centring piece (26) and to a sleeve-shaped thrust piece (39), and in that the thrust piece (39) comes into contact with a locking element (37) with its end facing the counterbore (1) and comes into contact with the central rod (42) with its other end.

2. Device according to Claim 1, characterized in that a plurality of push rods (51) are allocated to the gear housing (11), in that each push rod (51), with its end remote from the gear housing (11), abuts against a bracket (52) of the cross-shaped housing (50), and in that a bolt (53) screwed into a cap (55) of the housing part (25) passes with its free end through the bracket (52) and projects into a centre bore (54) of the push rod (51), and in that each bolt (53) accommodates a disc-spring stack (56) acting between the cap (55) and the bracket (52).

3. Device according to Claim 1, characterized in that the centring piece (26) is detachably connected to the housing part (25), lockable pins (63) of the centring piece (26) coming to bear against a spring-mounted stop bolt (31).

4. Device according to Claim 1, characterized in that the stop (34) is a collar bolt, through which a plurality of body-fit screws (36) pass in the region of the collar (35), which body-fit screws (36) are screwed in position in the centring piece and permit the predeterminable travel of the stop, in that the bolt part (38) of the collar bolt projects into the thrust piece (39) and is supported relative to the thrust piece in a spring-mounted manner, in that a transverse pin (23) passing through the bolt part (38) is guided in an elongated hole (43) of the thrust piece (39), and in that the locking element consists of a plurality of spring-mounted cylinders (37) which engage in an annular groove (62), arranged between transverse pin and collar, of the bolt part (38).

5. Device according to Claim 1, characterized in that the centring piece (26) has a centring aid (44) which acts radially outwards and comes to bear against the cylindrical wall of the counterbore (1).

6. Device according to Claim 1, characterized in that a displacement-measuring device (49) for checking the relative movement of the gearing housing (11) is allocated to the intermediate piece (46).

7. Method of inserting a plurality of dimples (3) in a cylindrical wall of a counterbore (1) provided in a component (2) with a device according to one of Claims 2 to 6, characterized in that the device is brought into position in alignment with the centring piece (26) and relative to the counterbore (1), in that the milling spindles (13) are set in rotation, in that, by moving the device in the axial direction, the stop (34) is brought to bear against a base surface of the counterbore (1) and is moved relative the centring piece (26) until the locking is neutralized, and in that, after the locking is neutralized, the gear housing (11) is moved by a predeterminable extent in the direction of the centring piece (26) together with the central rod (42), the thrust piece (39) and the cross-shaped housing (50), in the course of which a radially directed feed movement of the milling spindles (13) and thus of the milling cutters (28) is continuously effected, and in that the device is retracted in the axial direction, in the course of which the force of the disc-spring stack (56) moves the cross-shaped housing (50), the bearing housing (24) with the milling spindles (13), and the gear housing (11) back into their initial position and the locking between stop (34) and centring piece (26) is restored.

## Revendications

1. Dispositif pour réaliser plusieurs cavités (3) de petites dimensions dans une paroi cylindrique d'un trou borgne (1) aménagé dans une pièce (2), comportant des broches (13) porte-fraise en un nombre qui correspond au nombre de petites cavités à réaliser, lesquelles broches sont disposées de manière planétaire par rapport à une tige (42) centrale, portent chacune une fraise (28) et sont guidées dans un corps (24) formant palier, une partie boîtier (25) qui contient les éléments de commande pour un déplacement radial des broches porte-fraise (13) étant liée à une pièce de centrage (26) tournée vers le trou borgne et à une pièce intermédiaire (46) à l'opposé du trou borgne, laquelle pièce intermédiaire, de son côté, forme avec un boîtier (11) de transmission une sorte de liaison cylindre/piston, la tige (42) centrale étant reliée au boîtier (11) de transmission et le boîter (11) de transmission exécutant un déplacement prédéterminé en direction du trou borgne (1) lorsque la pièce de centrage (26) rencontre une résistance, caractérisé par le fait qu'un boîtier (50) à section transversale cruciforme peut être déplacé par rapport à la partie boîtier (25), dans la direction de l'axe de celle-ci, par le fait que le boîtier (50) cruciforme porte des axes (59) qui sont disposés en vis-à-vis, pénètrent à l'intérieur de celui-ci et peuvent se déplacer dans des rainures (60) du corps (24) formant palier, qui sont disposées également en vis-à-vis et divergent en direction de la pièce de centrage (26), par le fait que la partie de la pièce de centrage (26) tournée vers le trou borgne est agencée sous forme de butée (34) mobile par rapport à la pièce de centrage et par rapport à un élément de poussée (39) en forme de manchon et par le fait que l'élément de poussée (39) est en contact par son extrémité tournée vers le trou borgne avec un élément de verrouillage (37) de la butée (34) et par son autre extrémité avec la tige (42) centrale.

2. Dispositif selon la revendication 1, caractérisé par le fait que plusieurs tiges de poussée (51) sont en contact par leur extrémité éloignée du boîtier de transmission (11) avec une branche (52) du boîtier (50) cruciforme, par le fait qu'une vis (53) vissée dans un couvercle (55) de la partie boîtier (25) traverse la branche (52) avec son extrémité libre et pénètre dans un perçage (54) central de la tige de poussée (51) et par le fait que chaque vis (53) reçoit un paquet de rondelles ressorts (56) qui agit entre le couvercle (55) et la branche (52).

3. Dispositif selon la revendication 1, caractérisé par le fait que la pièce de centrage (26) est liée de manière séparable à la partie boîtier (25), des axes (63) verrouillables de la pièce de centrage (26) venant en appui sur des tiges de butée (31) élastiques.

4. Dispositif selon la revendication 1, caractérisé par le fait que la butée (34) est un boulon à collet qui, au niveau de son collet (35), est traversé par plusieurs vis ajustées (36) qui sont vissées dans la pièce de centrage et permettent le déplacement prédéterminé de la butée, par le fait que la partie vis (38) du boulon à collet pénètre dans l'élément de poussée (39) et est montée élastique vis-à-vis dudit élément de poussée par le fait qu'une goupille (23) transversale qui traverse la partie vis (38) est guidée dans un trou (43) oblong de l'élément de poussée (39) et par le fait que l'élément de verrouillage est formé de plusieurs cylindres (37) sollicités par ressorts qui pénètrent dans une gorge (62) annulaire de la partie vis (38), aménagée entre la goupille transversale et le collet.

5. Dispositif selon la revendication 1, caractérisé par le fait que la pièce de centrage (26) comporte un moyen auxiliaire (44) de centrage qui agit radialement vers l'extérieur et vient en appui sur la paroi cylindrique du trou borgne (1).

6. Dispositif selon la revendication 1, caractérisé par le fait qu'un dispositif (49) de mesure de course est associé à la pièce intermédiaire (46) à des fins de contrôle du déplacement relatif du boîtier de transmission (11).

7. Procédé de réalisation de plusieurs cavités (3) de petites dimensions dans une paroi cylindrique d'un trou borgne (1) prévu dans une pièce (2) au moyen d'un dispositif selon une des revendications 2 à 6, caractérisé par le fait que l'on amène le dispositif dans une position dans laquelle la pièce de centrage (26) est alignée avec le trou borgne (1), par le fait que l'on met la broche porte-fraise (13) en rotation, par le fait que par déplacement du dispositif dans la direction axiale on amène la butée (34) en appui sur une surface de base du trou borgne (1) et on la déplace par rapport à la pièce de centrage (26) jusqu'à la libération du verrouillage et par le fait qu'après annulation du verrouillage on déplace le boîtier de transmission (11) avec la tige centrale (42), l'élément de poussée (39) et le boîtier (50) cruciforme d'une valeur prédéterminée en direction de la pièce de centrage (26), un mouvement progressif d'avance radiale des broches porte-fraises (13) et des fraises (28) ayant lieu, par le fait que l'on retire le dispositif dans la direction axiale, la force du paquet de rondelles-ressorts (56) ramenant le boîtier cruciforme (50), les boîtiers (24) formant paliers et le boîtier de transmission (11) dans leur position d'origine et le verrouillage entre la butée (34) et la pièce de centrage (26) étant rétabli.
